# EUROPÄISCHE PATENTSCHRIFT

(11) **EP 2 816 333 B1**
(45) Veröffentlichungstag und Bekanntmachung des Hinweises auf die Patenterteilung: **04.01.2017**
(21) Anmeldenummer: 14002079.3
(22) Anmeldetag: 17.06.2014
(51) Int. Cl.: G01K 11/12, B32B 9/00, E04F 15/10, E04H 4/12, F24J 2/42, E04H 4/00, F24J 2/48, E04H 4/14

(54) **Thermochrome Schwimmbeckenverkleidung**
Thermochromic swimming pool lining
Revêtement de bassin thermochrome

(30) Priorität: 20.06.2013 DE 102013010210
(43) Veröffentlichungstag der Anmeldung: 24.12.2014
(73) Patentinhaber: Knickenberg, Veit, 80799 München (DE)
(72) Erfinder: Knickenberg, Veit, 80799 München (DE)
(74) Vertreter: Hafner & Kohl

(56) Entgegenhaltungen:
- WO-A1-94/15785
- WO-A1-2010/000476
- AU-B2- 2005 279 676
- US-A1- 2003 188 737
- US-B1- 6 526 965

## Beschreibung

Die Erfindung betrifft ein Bauelement für ein Schwimmbecken, welches das Schwimmbecken zumindest abschnittsweise auskleidet, wie beispielsweise eine Fliese, eine Folie, eine Schale, eine Wanne, ein Becken, ein Beckenelemente oder dergleichen. Ferner betrifft die vorliegende Erfindung ein Schwimmbecken.

Schwimmbeckenverkleidungen, wie Folien, Schalen, Fliesen oder Anstriche, die zur Auskleidung des Schwimmbeckens dienen, sind im Stand der Technik hinlänglich bekannt. Ebenso ist bekannt, das Schwimmbecken aus Schalen beziehungsweise Schalenelementen innenseitig zu verkleiden, wobei beispielsweise auch das gesamte Schwimmbecken von einer einzigen aus Kunststoff gefertigten Schale, ausgekleidet werden kann.

Dem Stand der Technik sind ebenfalls thermochrome Stoffe zu entnehmen, die beim Erreichen einer stoffspezifischen Temperatur ihre optischen Eigenschaften, insbesondere ihre Farbe, ändern. Die dabei einhergehenden Änderungen der physikalischen Eigenschaften des Stoffes können insbesondere das Absorptionsvermögen des thermochromen Stoffes gegenüber elektromagnetischer Strahlung des sichtbaren Spektrums betreffen. Der Vorgang ist reversibel oder irreversibel, sodass beispielsweise ein einmaliger Farbumschlag beim Erwärmen des Stoffes erfolgt oder - im Falle der reversiblen Thermochromie - der Stoff beim anschließenden Abkühlen unterhalb der für den Farbumschlag maßgebenden Farbübergangstemperatur wieder seine Ausgangsfärbung annimmt.

Ebenso sind Stoffe bekannt, deren thermochrome Eigenschaften das Reflektions- und Transmissionsverhalten betrifft. So ist beispielsweise aus der DE 10 2008 051 782 B4 ein thermochromer Stoff bekannt, der zumindest für Strahlung mit einer Wellenlänge von 600 nm bis 1200 nm bei einer Temperatur unterhalb der stoffspezifischen Temperatur weitgehend transparent ist und bei einer Temperatur oberhalb der stoffspezifischen Temperatur die auftreffende Strahlung nahezu vollständig reflektiert. AU 2005 279 676 B2 offenbart ein Substrat mit einer besonderen dekorativen Erscheinung. Das Substrat umfasst eine Beschichtung aus einer Harzkomponente und einem speziellen Effektpigment.

WO 2010/000476 A1 offenbart ein Kompositmaterial. Das Kompositmaterial enthält eine poröse Materialkomponente und eine nanopartikuläre Materialkomponente.

WO 94/15785 A1 offenbart eine mehrlagige Kompositstruktur. Die Kompositstruktur umfasst ein funktionelles Material, welches in Abhängigkeit diverser physikalischer Parameter, u.a. der Temperatur, seine optischen Eigenschaften verändert.

US 6 526 965 B1 offenbart eine mehrlagige Strahlungssammeleinheit zur Verwendung in einem Solarpanel. Die Strahlungssammeleinheit umfasst eine auf eine Basislage befestigte Absorptionslage.

US 2003/188737 A1 offenbart eine Heizvorrichtung für ein Schwimmbad. Die Heizvorrichtung ist dazu eingerichtet, das Schwimmbad mit Solarenergie zu beheizen.

Ausgehend von diesem Stand der Technik ist es Aufgabe der vorliegenden Erfindung, ein Bauelement für ein Schwimmbecken anzugeben, das eine besonders einfache und kostengünstige Möglichkeit bereitstellt, das Schwimmbecken zu beheizen.

Die Aufgabe wird gelöst durch ein Bauelement gemäß Patentanspruch 1.

Vorteilhafte Ausführungsbeispiele sind Gegenstand der Unteransprüche.

Das erfindungsgemäße Bauelement für ein Schwimmbecken ist zumindest abschnittsweise mit einer einen thermochromen Stoff enthaltenden Schicht versehen und/oder aus einem einen thermochromen Stoff enthaltenden Material gebildet. Der Einsatz eines thermochromen Stoffes ermöglicht die gezielte Veränderung der optischen Eigenschaften des Bauelements beim Erreichen vorgebbarer stoffspezifischer Temperaturen, insbesondere einer Veränderung des Absorptions- oder Reflektionsverhaltens für elektromagnetische Strahlung des sichtbaren Spektrums. Das Bauelement, beispielsweise eine Kunststofffolie, kleidet das Schwimmbecken zumindest abschnittsweise innenseitig aus und ist der Sonneneinstrahlung ausgesetzt. Somit erwärmt sich das Bauelement durch Absorption von Tageslicht, wobei die Wärme an das das Bauelement umgebende Wasser abgegeben wird. Erreicht das Bauelement beziehungsweise das Wasser des Schwimmbeckens eine vorgegebene Temperatur, so ändert der thermochrome Stoff derart seine optischen Eigenschaften, dass ein weiterer Wärmeeintrag aufgrund von Absorption von Tageslicht vermindert ist. Dies kann insbesondere durch Adaption des Reflektions- und/oder Absorptionsverhaltens des thermochromen Stoffes erfolgen.

So ist gemäß einem möglichen Ausführungsbeispiel vorgesehen, eine das Tageslicht absorbierende Fliese mit einem thermochromen Stoff zu beschichten, der unterhalb einer stoffspezifischen Temperatur nahezu vollständig transparent ist und somit die Absorption und damit die Erwärmung der Fliese nur unwesentlich beeinflusst. Oberhalb der für die Änderungen der optischen Eigenschaften des thermochromen Stoffes maßgeblichen stoffspezifischen Temperatur reflektiert die Schicht das einfallende Tageslicht nahezu vollständig, sodass einer weiteren Erwärmung entgegen gewirkt wird.

Nahezu vollständige Reflektion beziehungsweise Transmission entspricht einer Reflektion beziehungsweise Transmission von zumindest 80% der einfallenden Strahlung des sichtbaren Spektrums, mithin also einem Wellenlängenbereich von 300 nm bis 900 nm.

Somit ist eine Möglichkeit geschaffen, das Wasser im Schwimmbecken effizient nur mittels der aufgrund von Sonneneinstrahlung sich erwärmenden Bauelemente zu beheizen. Auf zusätzliche Heizanlagen, wie beispielsweise Wärmepumpen, Wärmetauscher oder externe Solaranlagen, kann verzichtet werden. Entsprechend werden hohe Anschaffungs- und Wartungskosten aber auch hohe Verbrauchskosten beim Betrieb des Schwimmbeckens vermieden. Zudem weisen typischerweise Solaranlagen, die zum Beheizen von Schwimmbecken eingesetzt werden, meist umfangreiche Solarkollektoren auf, die entweder in unmittelbarer Nähe zum Schwimmbecken oder auf Dachflächen angeordnet sind. Der dazu erforderliche Bauraum wird somit eingespart, da die Beheizung des Schwimmbeckens direkt über die das Schwimmbecken auskleidenden Bauelemente erfolgt.

Vorzugsweise ist der thermochrome Stoff derart ausgebildet, dass sein Absorptionsvermögen von Tageslicht bei einer Temperatur unterhalb einer stoffspezifischen Farbübergangstemperatur, bei Erreichen derer der Stoff einen Farbumschlag von einer ersten zu einer zweiten Färbung erfährt, höher ist als bei einer Temperatur oberhalb der Farbübergangstemperatur. Die den thermochromen Stoff enthaltende Schicht beziehungsweise das den thermochromen Stoff enthaltende Bauelement weist bei Temperaturen unterhalb der Farbübergangstemperatur einen dunklen Farbton auf und erwärmt sich somit durch Sonneneinstrahlung schneller als Bauelemente mit hellem Farbton. Bei Erreichen der Farbübergangstemperatur schlägt die Färbung des thermochromen Stoffes von der dunklen, ersten Färbung zur helleren, zweiten Färbung um, wobei die durch die Wahl des Stoffes vorgebbare Farbübergangstemperatur vorzugsweise einer gewünschten Wassertemperatur entspricht. Die hellere Färbung bei Temperaturen oberhalb der Farbübergangstemperatur bewirkt eine verminderte Absorption von Tageslicht, sodass ein weiteres Aufwärmen zumindest eingeschränkt ist. Somit kann einer zu starken Erwärmung des Schwimmbeckens insbesondere im Sommer und einer damit einhergehenden unerwünschten Algenbildung entgegengewirkt werden.

Die Farbübergangstemperatur liegt im Bereich 0° - 50° Celsius.

Bevorzugter Weise liegt die Farbübergangstemperatur in einem zum Schwimmen oder Baden angenehmen Bereich von 20° - 25° Celsius.

In Weiterbildung der Erfindung ist vorgesehen, dass der thermochrome Stoff mehrere Farbübergangstemperaturen aufweist. Der Stoff erfährt bei Erreichen einer jeweiligen Farbübergangstemperatur einen Farbumschlag von einer ein höheres Absorptionsvermögen gegenüber Tageslicht erlaubenden Färbung in eine ein im Vergleich geringeres Absorptionsvermögen gegenüber Tageslicht erlaubende Färbung. Somit sind mehrere Farbübergangstemperaturen beziehungsweise Farbumschläge vorgesehen, wobei der thermochrome Stoff beim Erwärmen sukzessiv von dunklen Färbungen in hellere Färbungen umschlägt, damit der Erwärmung des Badewassers entgegengewirkt wird, wenn dieses sich der gewünschten Temperatur nähert. Zudem kann ein Badegast anhand der Färbung der das vom Becken auskleidende Bauelement Rückschlüsse über die Temperatur des Wassers ziehen. Eine entsprechend dunkle Färbung weist auf eine unter Umständen zum Baden zu kalte Wassertemperatur hin.

Sind mehrere Farbübergangstemperaturen beziehungsweise Farbumschläge des thermochromen Stoffes vorgesehen, so liegt vorzugsweise eine erste Farbübergangstemperatur im Bereich von 10° - 15° Celsius und eine zweite Farbübergangstemperatur im Bereich von 20° - 25° Celsius. Zwar lassen sich heutzutage thermochrome Stoffe herstellen, die im Bereich von 0° - 70° Celsius eine Vielzahl von Farbübergangstemperaturen mit entsprechenden Färbungen aufweisen, jedoch sollte ein Toleranzbereich von ± 3° Celsius berücksichtigt werden, da dies der Genauigkeit entspricht, mit der Färbungen in unterschiedlichen RAL-Tönen hergestellt werden können.

Es versteht sich, dass der Farbumschlag vorzugsweise reversibel ist, um ein mehrfaches Beheizen des Schwimmbeckens mittels der Bauelemente zu ermöglichen.

Entsprechend möglicher Ausführungsbeispiele ist das Bauelement als Folie, Schale, Wanne, Beckenelement oder Fliese ausgebildet. Das Bauelement ist somit dafür vorgesehen, das Schwimmbecken innenseitig zumindest abschnittsweise auszukleiden. Alternativ dazu kann die den thermochromen Stoff enthaltende Schicht auch direkt, beispielsweise mittels eines Anstrichs, auf eine Bodenplatte und/oder einer Beckenwand des Schwimmbeckens aufgetragen sein.

Gemäß einem besonders kostengünstigen Ausführungsbeispiel ist das Bauelement aus einem den Stoff enthaltenden Kunststoff gebildet.

Vorzugsweise ist der Kunststoff ein Thermoplast, der sich beispielsweise mittels Extrusion in nahezu beliebige Formen, wie beispielsweise Schalen, Wannen, Beckenelemente oder Folien, verarbeiten lässt.

Bevorzugter Weise ist der thermochrome Stoff im Kunststoff homogen verteilt, sodass eine gleichmäßige Erwärmung des Bauelements beziehungsweise des das Bauelement umgebenden Wassers sichergestellt ist. Dies wird beispielsweise dadurch erreicht, dass der thermochrome Stoff einem thermoplastischen Kunststoff vor der Extrusion zugesetzt wird und das Bauelement in der gewünschten Form anschließend mittels Extrusion geformt wird.

Alternativ dazu kann das Bauelement auch aus einer den thermochromen Stoff enthaltenden Keramik gebildet sein.

In einem weiteren alternativen Ausführungsbeispiel ist das Bauelement aus Metall gebildet, dessen Oberfläche die den Stoff enthaltende Schicht aufweist.

Entsprechend möglicher Ausführungsformen ist der thermochrome Stoff eine anorganische oder organische Verbindung, insbesondere ein organisches Polymer.

Ein Schwimmbecken entsprechend der Erfindung weist zumindest ein Bauelement mit thermochromen Stoff auf, das das Schwimmbecken zumindest abschnittsweise innenseitig auskleidet. Dabei kann es sich bei dem Schwimmbecken sowohl um ein klassisches Schwimmbecken, welches im Boden versenkt angeordnet ist, handeln, als auch um ein Aufstellbecken, welches bei Bedarf auf- beziehungsweise abgebaut werden kann.

Im Folgenden wird die Erfindung anhand von Zeichnungen näher erläutert. Diese zeigen:
- Fig. 1:: eine Fliese, die eine einen thermochromen Stoff enthaltende Schicht aufweist,
- Fig. 2:: eine schematische Schnittdarstellung eines Schwimmbeckens, das innenseitig mit den in Fig. 1 gezeigten Fliesen ausgekleidet ist;
- Fig. 3:: ein als Aufstellbecken ausgeführtes Ausführungsbeispiel, welches innenseitig von einer einen thermochromen Stoff enthaltenden Folie ausgekleidet ist;
- Fig. 4:: eine Schnittdarstellung durch ein Schwimmbecken gemäß einem weiteren Ausführungsbeispiel, wobei Beckenwand und Bodenfläche von einer mit dem thermochromen Stoff beschichteten Schale gebildet ist.

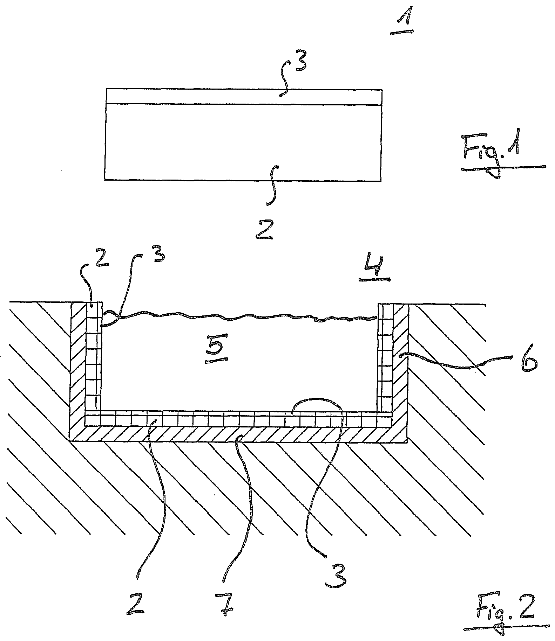

Figur 1 zeigt ein Bauelement 1, welches als Fliese ausgeführt ist. Das Bauelement 1 besteht aus Keramik und weist einen Grundkörper 2 auf, der mit einer einen thermochromen Stoff enthaltenden Schicht 3 versehen ist. Der thermochrome Stoff des in Figuren 1 und 2 gezeigten ersten Ausführungsbeispiels weist eine stoffspezifische Farbübergangstemperatur von 20° Celsius auf, wobei der Stoff unterhalb der Farbübergangstemperatur dunkelblau, und oberhalb der Farbübergangstemperatur hellblau erscheint. Entsprechend wird von der dunklen Färbung bei tiefen Temperaturen ein großer Teil des einfallenden Tageslichts absorbiert und in Wärmeenergie umgewandelt. Das Absorptionsvermögen der dunkelblauen Färbung ist somit größer als das entsprechende Absorptionsvermögen der hellblauen Färbung, in welches der thermochrome Stoff umschlägt, wenn die Farbübergangstemperatur erreicht wird.

Figur 2 zeigt eine schematische Schnittdarstellung durch ein Schwimmbecken 4, welches innenseitig mit den in Figur 1 gezeigten, als Fliesen ausgeführten Bauelementen 1 ausgekleidet ist. Dabei sind die Fliesen derartig angeordnet, dass die den thermochromen Stoff enthaltende Schicht 3 von Wasser 5 umspült ist, wenn das Schwimmbecken 4 befüllt ist. Bei der in Figur 2 gezeigten Bauform handelt es sich um ein klassisches, im Boden versenktes Schwimmbecken 4, wobei die als Fliesen ausgeführten Bauelemente 1 sowohl die Beckenwände 6 als auch die Bodenfläche 7 des Schwimmbeckens 4 nahezu vollständig überdecken.

Die den thermochromen Stoff enthaltende Schicht 3 ist der Sonneneinstrahlung ausgesetzt, sodass die Erwärmung der Fliese maßgeblich vom Absorptionsverhalten des thermochromen Stoffes bestimmt ist. Die dunkelblaue Färbung des Stoffes unterhalb der Farbübergangstemperatur stellt dabei eine schnelle Erwärmung der Fliese und damit des die Fliese umgebende Wassers bei tiefen Temperaturen sicher. Oberhalb der Farbübergangstemperatur hat der thermochrome Stoff eine hellblaue Färbung, woraus eine verminderte Absorption und damit eine verminderte Erwärmung resultiert. Somit wird eine weitere Erwärmung des Wassers 5 durch Absorption von eintreffender Sonnenenergie zumindest vermindert.

In einem alternativen Ausführungsbeispiel ist der thermochrome Stoff derart ausgeführt, dass dieser mehrere Farbübergangstemperaturen aufweist, wobei bei Erreichen der jeweiligen Farbübergangstemperatur ein Farbumschlag stattfindet. Dabei schlägt die Färbung des Stoffes sukzessive mit steigender Temperatur von dunklen nach helleren Färbungen um. Dies bewirkt zum einen eine schnelle Erwärmung des Wassers 5 im Schwimmbecken 4 bei niedrigen Temperaturen und eine verminderte Erwärmung des Wassers 5 bei hohen Temperaturen, als auch eine Anzeige der Wassertemperatur, die ein Badegast beziehungsweise Benutzer des Schwimmbeckens 4 anhand der Helligkeit der den thermochromen Stoff enthaltenden Schicht 3 ablesen kann.

Es versteht sich, dass die blaue Färbung des thermochromen Stoffes gemäß dem ersten Ausführungsbeispiel lediglich beispielhaft zu verstehen ist. Entsprechend können auch alle anderen Farben des sichtbaren Spektrums zum Einsatz kommen.

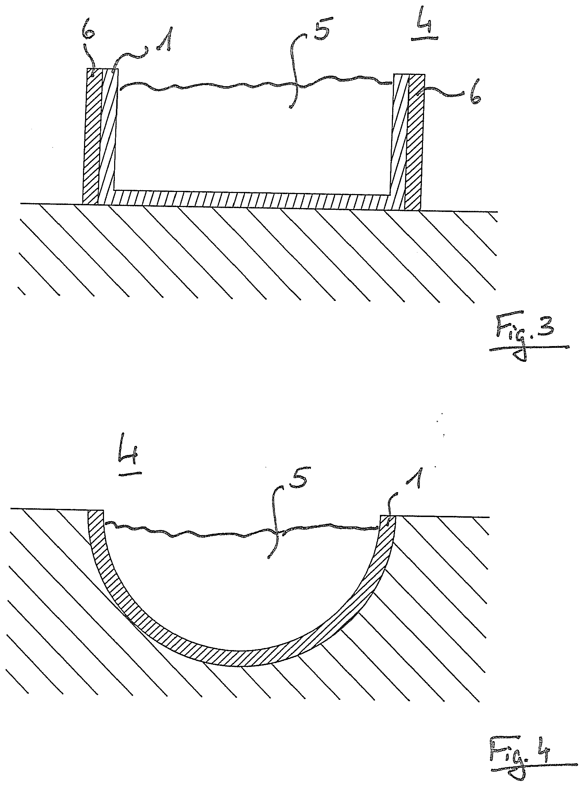

Figur 3 zeigt ein zweites Ausführungsbeispiel, bei dem das Schwimmbecken 4 als auf- und abbaubares Aufstellbecken ausgeführt ist. Das Schwimmbecken 4 hat Beckenwände (6), die aus Kunststoff bestehen. Das Schwimmbecken 4 ist innenseitig von einem als Folie ausgebildeten Bauelement 1 ausgekleidet, welche aus Kunststoff besteht, in dem der thermochrome Stoff homogen verteilt ist. Hierbei weist der verwendete thermochrome Stoff eine erste Farbübergangstemperatur bei etwa 12° Celsius, und eine zweite Farbübergangstemperatur bei etwa 22° Celsius auf. Bei Erwärmung schlägt die Färbung der Schicht 3 von einer dunklen Farbgebung in eine hellere Farbgebung über, wenn eine jeweilige Farbübergangstemperatur erreicht wird. Hellere Farbgebungen der Folie zeigen somit höhere Wassertemperaturen an.

Es versteht sich, dass auch Schwimmbecken 4, die im Boden versenkt sind, von einer den thermochromen Stoff enthaltenden Folie ausgekleidet sein können.

Figur 4 zeigt eine schematische Schnittdarstellung eines Schwimmbeckens 4 gemäß einem dritten Ausführungsbeispiel. Das im Boden eingelassene Schwimmbecken 4 ist von einem als Schale ausgeführten Bauelement 1 begrenzt, die aus einem thermoplastischen Kunststoff besteht. Die Schale enthält den thermochromen Stoff gemäß dem zweiten Ausführungsbeispiel. Der thermochrome Stoff wurde dem thermoplastischen Kunststoff vor Extrusion beigemengt, woraus eine besonders homogene Verteilung des Stoffes im Material des Bauelements 1 resultiert.

Es versteht sich, dass die hier gezeigten Ausführungsbeispiele lediglich beispielhaft und nicht als einschränkend aufzufassen sind. Insbesondere sind Kombinationen der einzelnen Ausführungsbeispiele vorgesehen, soweit diese sich nicht gegenseitig ausschließen. So können beispielsweise Schwimmbecken 4, die im Boden versenkt sind, mit Folien ausgekleidet sein, die den thermoplastischen Stoff beinhalten. Des Weiteren ist der Einsatz von thermochromen Stoffen nicht auf solche beschränkt, die im relevanten Temperaturbereich von zirka 0° - 50° Celsius lediglich zwei beziehungsweise drei Färbungen aufweisen. Ebenso können thermochrome Stoffe Einsatz finden, die in dem relevanten Temperaturbereich vier Mal, fünf Mal oder öfter die Farbe wechseln, um beispielsweise eine detailliertere Anzeige der Wassertemperatur bereitzustellen. Aufstellbecken gemäß der Erfindung können beispielsweise Beckenwände 6 aus Metall aufweisen, die innenseitig mit einer den thermochromen Stoff enthaltenden Beschichtung versehen sind.

## Patentansprüche

1. Bauelement (1) für ein Schwimmbecken (4), wobei das Bauelement (1) als Heizelement für das in dem Schwimmbecken (4) befindliche Wasser ausgebildet ist und wobei sich das Bauelement (1) durch Absorption von Tageslicht erwärmt und die Wärme an das das Bauelement (1) umgebende Wasser abgibt, **dadurch gekennzeichnet, dass** das Bauelement (1) zumindest abschnittsweise mit einer einen thermochromen Stoff enthaltenden Schicht (3) versehen ist und/oder aus einem einen thermochromen Stoff enthaltenden Material gebildet ist, wobei der Wärmeeintrag des Bauelements (1) aufgrund von Änderungen des Absorptionsverhaltens von Tageslicht des thermochromen Stoffs veränderbar ist.

2. Bauelement (1) nach Anspruch 1, **dadurch gekennzeichnet, dass** der Stoff derart ausgebildet ist, dass sein Absorptionsvermögen von Tageslicht bei einer Temperatur unterhalb einer stoffspezifischen Farbübergangstemperatur, bei Erreichen derer der Stoff einen Farbumschlag von einer ersten Färbung zu einer zweiten Färbung erfährt, höher ist als bei einer Temperatur oberhalb der Farbübergangstemperatur.

3. Bauelement (1) nach Anspruch 2, **dadurch gekennzeichnet, dass** die Farbübergangstemperatur im Bereich von 0° - 50° Celsius, insbesondere im Bereich von 20° - 25° Celsius, liegt.

4. Bauelement (1) nach Anspruch 1, **dadurch gekennzeichnet, dass** der thermochrome Stoff mehrere Farbübergangstemperaturen aufweist, wobei der Stoff bei Erreichen einer jeweiligen Farbübergangstemperatur einen Farbumschlag von einer ein höheres Absorptionsvermögen gegenüber Tageslicht erlaubenden Färbung in eine ein im Vergleich geringeres Absorptionsvermögen gegenüber Tageslicht erlaubende Färbung erfährt.

5. Bauelement (1) nach Anspruch 4, **dadurch gekennzeichnet, dass** eine erste und zweite Farbübergangstemperatur im Bereich von 0°- 50° Celsius, insbesondere die erste Farbübergangstemperatur im Bereich von 10° - 15° Celsius und die zweite Farbübergangstemperatur im Bereich von 20° - 25° Celsius, liegen.

6. Bauelement (1) nach Anspruch 5, **dadurch gekennzeichnet, dass** der Farbumschlag reversibel ist.

7. Bauelement (1) nach einem der vorherigen Ansprüche, **dadurch gekennzeichnet, dass** das Bauelement (1) als Folie, Schale, Wanne, Beckenelement oder Fliese ausgebildet ist.

8. Bauelement (1) nach einem der vorherigen Ansprüche, **dadurch gekennzeichnet, dass** es aus einem den Stoff enthaltenden Kunststoff gebildet ist.

9. Bauelement (1) nach Anspruch 8, **dadurch gekennzeichnet, dass** der Kunststoff ein Thermoplast ist.

10. Bauelement (1) nach Anspruch 8 oder 9, **dadurch gekennzeichnet, dass** der Stoff im Kunststoff homogen verteilt ist.

11. Bauelement (1) nach einem der vorherigen Ansprüche, **dadurch gekennzeichnet, dass** es aus einer den Stoff enthaltenden Keramik gebildet ist.

12. Bauelement (1) nach einem der vorherigen Ansprüche, **dadurch gekennzeichnet, dass** es aus Metall gebildet ist, dessen Oberfläche die den Stoff enthaltende Schicht (3) aufweist.

13. Bauelement (1) nach einem der vorherigen Ansprüche, **dadurch gekennzeichnet, dass** der Stoff eine anorganische oder organische Verbindung, insbesondere ein organisches Polymer, ist.

14. Schwimmbecken (4) mit einem Bauelement (1) nach einem der vorherigen Ansprüche.

15. Verfahren zum Beheizen von in einem Schwimmbecken (4) befindlichen Wassers, **dadurch gekennzeichnet, dass** das Schwimmbecken (4) mindestens ein als Heizelement für das in dem Schwimmbecken (4) befindliche Wasser ausgebildetes und zumindest abschnittsweise mit einer einen thermochromen Stoff enthaltenden Schicht (3) versehenes und/oder aus einem einen thermochromen Stoff enthaltenden Material gebildetes Bauelement (1), insbesondere ein Bauelement (1) nach einem der vorherigen Ansprüche, umfasst, wobei sich das Bauelement (1) durch Absorption von Tageslicht erwärmt und die Wärme an das das Bauelement (1) umgebende Wasser abgibt, wobei der Wärmeeintrag des Bauelements (1) aufgrund von Änderungen des Absorptionsverhaltens von Tageslicht des thermochromen Stoffs veränderbar ist.

## Claims

1. Component (1) for a swimming pool (4), where the component (1) is designed as heating element for the water located in the swimming pool (4) and where absorption of daylight heats the component (1), which emits the heat to the water surrounding the component (1), **characterized in that** at least a section of the component (1) has been provided with a layer (3) comprising a thermochromic substance, and/or is composed of a material comprising a thermochromic substance, where the heat intake of the component (1) can be altered by changing the daylight absorption behaviour of the thermochromic substance.

2. Component (1) according to Claim 1, **characterized in that** the composition of the substance is such that its daylight absorbency at a temperature below a substance-specific colour-transition temperature at which, when this temperature is reached, the substance undergoes a colour change from a first colour to a second colour is higher than at a temperature above the colour-transition temperature.

3. Component (1) according to Claim 2, **characterized in that** the colour-transition temperature is in the range from 0° to 50° Celsius, in particular in the range from 20° to 25° Celsius.

4. Component (1) according to Claim 1, **characterized in that** the thermochromic substance has a plurality of colour-transition temperatures, where on reaching a respective colour-transition temperature the substance undergoes a colour change from a colour allowing higher daylight absorbency to a colour allowing lower daylight absorbency.

5. Component (1) according to Claim 4, **characterized in that** a first and second colour-transition temperature are in the range from 0° to 50° Celsius, in particular the first colour-change temperature being in the range from 10° to 15° Celsius and the second colour-transition temperature being in the range from 20° to 25° Celsius.

6. Component (1) according to Claim 5, **characterized in that** the colour change is reversible.

7. Component (1) according to any of the preceding claims, **characterized in that** the component (1) is designed as foil, shell, trough, pool element or tile.

8. Component (1) according to any of the preceding claims, **characterized in that** it is composed of a plastic comprising the substance.

9. Component (1) according to Claim 8, **characterized in that** the plastic is a thermoplastic.

10. Component (1) according to Claim 8 or 9, **characterized in that** the substance has homogeneous distribution in the plastic.

11. Component (1) according to any of the preceding claims, **characterized in that** it is composed of a ceramic comprising the substance.

12. Component (1) according to any of the preceding claims, **characterized in that** it is composed of metal with, on the surface thereof, the layer (3) comprising the substance.

13. Component (1) according to any of the preceding claims, **characterized in that** the substance is an inorganic or organic compound, in particular an organic polymer.

14. Swimming pool (4) with a component (1) according to any of the preceding claims.

15. Process for the heating of water located in a swimming pool (4), **characterized in that** the swimming pool (4) comprises at least one component (1) designed as heating element for the water located in the swimming pool (4) and at least a section of the component (1) has been provided with a layer (3) comprising a thermochromic substance, and/or is composed of a material comprising a thermochromic substance, in particular comprises a component (1) according to any of the preceding claims, where absorption of daylight heats the component (1), which emits the heat to the water surrounding the component (1), where the heat intake of the component (1) can be altered by changing the daylight absorption behaviour of the thermochromic substance.

## Revendications

1. Élément (1) pour un bassin de natation (4), l'élément (1) étant conçu comme élément chauffant pour l'eau se trouvant dans le bassin de natation (4), l'élément (1) s'échauffant par absorption de la lumière du jour et transmettant la chaleur à l'eau entourant l'élément (1), **caractérisé en ce que** l'élément (1) est pourvu, au moins par sections, d'une couche (3) contenant une substance thermochrome et/ou est constitué par un matériau contenant une substance thermochrome, l'apport de chaleur de l'élément (1) pouvant être modifié sur base de modifications du comportement d'absorption de la lumière du jour de la substance thermochrome.

2. Élément (1) selon la revendication 1, **caractérisé en ce que** la substance est conçue de manière telle que son pouvoir d'absorption de la lumière du jour à une température inférieure à une température de transition de couleur spécifique à la substance, la substance subissant un changement de couleur d'une première couleur vers une deuxième couleur lorsque cette température est atteinte, est supérieur à celui à une température supérieure à la température de transition de couleur.

3. Élément (1) selon la revendication 2, **caractérisé en ce que** la température de transition de couleur se situe dans la plage de 0°C-50°C, en particulier dans la plage de 20°C-25°C.

4. Élément (1) selon la revendication 1, **caractérisé en ce que** la substance thermochrome présente plusieurs températures de transition de couleur, la substance subissant un changement de couleur d'une couleur permettant un pouvoir d'absorption plus élevé par rapport à la lumière du jour vers une couleur permettant un pouvoir d'absorption comparativement plus faible par rapport à la lumière du jour chaque fois qu'elle atteint une température de transition de couleur.

5. Élément (1) selon la revendication 4, **caractérisé en ce qu'**une première et une deuxième température de transition de couleur se situent dans la plage de 0°C-50°C, en particulier, la première température de transition de couleur se situe dans la plage de 10°C-15°C et la deuxième température de transition de couleur se situe dans la plage de 20°C-25°C.

6. Élément (1) selon la revendication 5, **caractérisé en ce que** le changement de couleur est réversible.

7. Élément (1) selon l'une quelconque des revendications précédentes, **caractérisé en ce que** l'élément (1) est conçu sous forme de feuille, de coque, de cuve, d'élément de bassin ou de carrelage.

8. Élément (1) selon l'une quelconque des revendications précédentes, **caractérisé en ce qu'**il est constitué par un matériau synthétique contenant la substance.

9. Élément (1) selon la revendication 8, **caractérisé en ce que** le matériau synthétique est un thermoplastique.

10. Élément (1) selon la revendication 8 ou 9, **caractérisé en ce que** la substance est répartie de manière homogène dans le matériau synthétique.

11. Élément (1) selon l'une quelconque des revendications précédentes, **caractérisé en ce qu'**il est constitué par une céramique contenant la substance.

12. Élément (1) selon l'une quelconque des revendications précédentes, **caractérisé en ce qu'**il est en métal dont la surface présente la couche (3) contenant la substance.

13. Élément (1) selon l'une quelconque des revendications précédentes, **caractérisé en ce que** la substance est un composé inorganique ou organique, en particulier un polymère organique.

14. Bassin de natation (4) présentant un élément (1) selon l'une quelconque des revendications précédentes.

15. Procédé pour chauffer de l'eau se trouvant dans un bassin de natation (4), **caractérisé en ce que** le bassin de natation (4) contient au moins un élément (1) conçu comme élément chauffant pour l'eau se trouvant dans le bassin de natation (4) et est pourvu, au moins par sections, d'une couche (3) contenant une substance thermochrome et/ou est constitué par un matériau contenant au moins une substance thermochrome, en particulier un élément (1) selon l'une quelconque des revendications précédentes, l'élément (1) s'échauffant par absorption de la lumière du jour et transmettant la chaleur à l'eau entourant l'élément (1), l'apport de chaleur de l'élément (1) pouvant être modifié en raison de modifications du comportement d'absorption de la lumière du jour de la substance thermochrome.
